# EUROPEAN PATENT SPECIFICATION

(11) **EP 3 108 214 B1**
(45) Date of publication and mention of the grant of the patent: **25.12.2024**
(21) Application number: 15751288.0
(22) Date of filing: 20.02.2015
(51) Int. Cl.: G01G 19/414, G01G 21/22, G01G 23/37

(54) **A FOLDABLE SCALE**
ZUSAMMENKLAPPBARE WAAGE
BALANCE PLIABLE

(30) Priority: 21.02.2014 SE 1400100; 27.08.2014 US 201414470847
(43) Date of publication of application: 28.12.2016
(73) Proprietor: Mandometer AB, 141 04 Huddinge (SE)
(72) Inventor: BERGH, Cecilia, S-118 20 Stockholm (SE); SÖDERSTEN, Per, S-118 20 Stockholm (SE)
(74) Representative: Bjerkén Hynell KB
(86) International application number: PCT/SE2015/000009
(87) International publication number: WO 2015/126305

(56) References cited:
- EP-A1- 2 081 000
- EP-A1- 2 081 000
- WO-A1-01/84094
- WO-A1-2011/127306
- WO-A1-2013/134275
- WO-A1-96/02183
- GB-A- 2 476 473
- US-A- 3 565 195
- US-A- 5 234 065
- US-A- 5 375 397
- US-A1- 2002 124 017
- US-A1- 2005 011 681
- US-A1- 2005 011 681
- US-A1- 2007 050 058
- US-A1- 2008 217 073
- US-A1- 2008 271 929
- US-A1- 2010 236 839

## Description

### Technical Field

The present invention pertains to a pocket size foldable scale, having at least one of an embedded miniature electronics, and a miniaturized plug in miniature electronics, and a utilization of the scale for a guided sound eating behavior.

### Background Art

There is a need for a scale that is foldable when persons who suffer from anorexia, bulimia, obesity, and gastrointestinal diseases, and other related subject matters, without to be stigmatized when eating in a public place such as restaurants, whereby the
scale measures the amount of food released from for instance a plate placed on the scale.

US200511681 describes a measuring device comprising a flexible resistive elastomer or a piezo-resistive senor. The scale may be rolled for storage or transportation.

EP2081000 teaches a thin pressure-sensing article which is flexible and comprises a plurality of pressure sensors less than 0.2 mm thick.

An apparatus named "Mandometer^{®}" has been developed at the Section of Applied Neuroendocrinology and Mandometer^{®} Clinic, Karolinska Institutet, Stockholm, Sweden. It consists of a scale that is connected to a computer. A plate is placed on the scale; the patient puts a measured portion of food determined by a therapist on the plate and the computer records and stores the weight loss from the plate while the patienteats.

This yields a curve of eating rate which is visible to the patient on the computer screen during a meal and can be compared to a pre-set eating curve on screen. At regular intervals, a rating scale appears on the monitor of the computer and the patient rates her/his level of fullness/satiety. The scale has numerical values from 0 (no satiety) to 100 (maximum satiety). As the patients rate their satiety a dot appears on the screen and yields a curve of the development of satiety (fullness). The patients can thus compare their development of fullness to a "normal" fullness curve again pre-set on screen. During"Mandometer^{®}-training" level of fullness/satiety. The scale has numerical values from 0 (no satiety) to 100 (maximum satiety). As the patients rate their satiety a dot appears on the screen and yields a curve of the development of satiety (fullness). The patients can thus compare their development of fullness to a "normal" fullness curve again pre-set on screen. During "Mandometer^{®}-training" the patients gradually adopts a more normal pattern of eating and satiety by following the training curves, which are displayed on the monitor during the meal. These methods were originally developed for treating eating disorders such as anorexia and bulimia nervosa: they have been evaluated in a randomized controlled trial with an estimated rate of remission of 75%. It was suggested many years ago that obese people eat at an increased rate and in a pilot study on obese adolescents using Mandometer^{®} this observation was confirmed.
The apparatus Mandometer^{®} is patented in several countries for instance in the U.S. under the Patent No. US5817006 to Bergh et al.

A foldable miniaturized scale for the purpose of the latter would be appreciated in this technical field.

### Summary of the invention

The present invention has as one aim among many to provide a scale that is foldable when persons who suffer from anorexia, bulimia, obesity, and gastrointestinal diseases, and other related medical issues can use without being stigmatized when eating in a public place such as restaurants, whereby the scale measures the amount of food released from for instance a plate placed on the scale in accordance with the findings of the Applied Neuroendocrinology and Mandometer^{®} Clinic, Karolinska Institutet, Stockholm, Sweden. The scale can also be utilized as a regular scale.

Hence, the present invention sets forth a pocket size foldable scale to guide persons to eat food in a regulated sound manner according to independent claim 1 and a respective utilization of such a scale according to independent claim 4.

One embodiment of the present invention provides that the scale is embedded in a thin plastic cover being washable for further use, or to be disposed after utilization.

Another embodiment provides that the scale is embedded in a disposable material, and to be disposed after utilization.

### A brief description of the drawings

Henceforth, reference is had to the accompanying drawings throughout the present description for a better understanding of the present inventions embodiments, and given examples, wherein:
**Fig. 1** schematically illustrates a foldable scale in one embodiment in accordance with the present invention;
**Fig. 2** schematically illustrates an electronic circuit in accordance with the present invention;
**Fig. 3** schematically illustrates a shape of a conductor/pressure sensitive ink in accordance with the present invention;
**Fig. 4** schematically illustrates a foldable scale with a plug in electronic circuit;
**Fig. 5** schematically illustrates a folded scale in a cover;
**Fig. 6** schematically illustrates a rolled scale; and
**Fig. 7** schematically illustrates a cover for a scale with a lid.

### Detailed description of preferred embodiments

The present invention provides a miniature pocket sized scale, which is foldable, and a utilization of it by persons who suffer from anorexia, bulimia, obesity, and gastrointestinal diseases, and other related medical issues without being stigmatized when eating in a public place such as restaurants, whereby the scale measures the amount of food released from for instance a plate placed on the scale in accordance with the findings of the Applied Neuroendocrinology and Mandometer^{®} Clinic, Karolinska Institutet, Stockholm, Sweden.

Hereby, the present inventions utilization is related to a scale with communication abilities with a smart device with cellular phone capabilities such as cellular phones, PDA's and like devices that are handheld as for instance an IPhone^{®}, iPad^{®} or android phone, or pad, and the likes, with a suitable applet adapted to the present invention or other suitable software. The scale can in one embodiment be utilized to measure every portion of food eaten by a person from a plate or bowl or the like placed on the scale during a meal. This scale is thus utilized in teaching persons suffering from anorexia nervosa, bulimia nervosa, obesity, other gastrointestinal problems and persons that would like to have control of their intake of food to keep them fit.

Such a portable pocket sized scale with embedded WI-FI, Bluetooth and/or NFC, near field communication, radio communication capabilities to a smart phone, PC or like devices with a display, can be helpful in several situations. It can for instance be utilized by a person to keep arbitrary contact with an expert/ therapist for receiving e.g. advices, comfort, and to immediately transmit eating patterns or at least at one of a predetermined time, at the will of a person utilizing the scale, at the finishing of at least one session and at an arbitrary time. The expert/therapist can also provide those using the scale with suggestions of which reference standard to utilize when eating depending on the measurements results sent to a main computer/server. Hence, a person eating can be advised how to adapt the eating behavior compared with a previous registered measurement to improve/adapt the eating behavior.

A scale according to the present invention and its technical field is unique as it creates total freedom for persons utilizing it, i.e. they do not need to sit at a medical institution or at home. Now they can eat with the apparatus at almost any given place and still be able to receive response to their eating behavior from an expert at a remote site. It is also of outermost importance that the person eating has a small pocket size apparatus, which can be utilized discretely, thus avoiding feeling ashamed or being stigmatized, and having other persons glance at them, which will be the case with previous bigger apparatuses in the present technical field. Such bigger devices are more suitable in an institution or at home.

That people feel uncomfortable or ashamed when eating with a special apparatus which is visible to others has been observed during clinical trials and does not promote a positive feeling to persons who are already stigmatized.

A study regarding obesity among children and youth was conducted at Bristol Royal Hospital for Children in England utilizing the "Mandometer^{®}", which was developed at the Section of Applied Neuroendocrinology and Mandometer^{®} Clinic, Karolinska Institutet, Stockholm, Sweden. It consists of a scale that is connected to a computer. A plate is placed on the scale; the patient puts a measured portion of food determined by a therapist on the plate and the computer records and stores the weight loss from the plate while the patient eats.

This yields a curve of eating rate which is visible to the patient on the computer screen during a meal and can be compared to a pre-set eating curve or reference standard on screen.

At regular intervals, a rating scale appears on the monitor of the computer and the patient rates her/his level of fullness. The scale has for instance numerical values from 0 (no satiety) to 100 (maximum satiety). As the patient rates their satiety a dot appears on the screen and yields a curve of the development of satiety (fullness). The patient can thus compare their development of fullness to a "normal" fullness curve for instance a Sigmoid shaped curve again pre-set on screen. During "Mandometer^{®}-training" the patient gradually adopts a more normal pattern of eating and satiety by following the training curves, which are displayed on the monitor during the meal. These methods are also used for treating eating disorders such as anorexia and bulimia nervosa.

This study came to a further improved possible outcome, namely that Mandometer^{®} curves for practicing eating should probably have a decelerated shape, as this pattern may protect individuals from overeating. Analysis of the average speed of eating, as used here, neglects minute-to-minute changes during the meal, which may explain the absence of a statistically significant effect on this simplified measure of speed of eating. The findings of decelerated eating have been undergoing further scientific tests and analysis emanating in the following scientific papers "Decelerated and linear eaters: Effect of eating rate on food intake and satiety Modjtaba Zandian a), loannis loakimidis a), Cecilia Bergh a), Ulf Brodin a),b), Per Södersten a, published by Elsevier, Physiology & Behavior, received March 18, 2008, received in revised form 2 October 2, 2008, and accepted October 9, 2008:
a) Karolinska Institutet, Section of Applied Neuroendocrinology, NVS, and Mandometer and Mandolean Clinics, AB Mando, Novum, S-141 57 Huddinge, Sweden
b) Karolinska Institutet, LIME, Section of Medical Statistics, S-171 77 Stockholm, Sweden. Another published paper is "Linear eaters turned decelerated: Reduction of a risk for disordered eating?" to Modjtaba Zandian, loannis loakimidis, Cecilia Bergh, Per Södersten, published by Elsevier, Physiology & Behavior, received July 4, 2008, revised November 14, 2008, and accepted November 25, 2008.

The application program (app) or computer program in accordance with the present invention is adapted to provide reference curves for eating speed, and satiety as well as graphical curves for the actual eating speed, and a rating curve for satiety, where a person eating can rate its satiety. The reference curve for satiety is preferably in the shape of a sigmoid curve, which has been found to accurately follow the feeling of satiety for a person with a healthy eating behavior during a meal. The sigmoid curve following satiety during a meal has been invented by the persons mentioned above.

Hence, one objective of the present invention is to provide a foldable miniaturized scale with embedded electronics to communicate with for instance a smart phone, having an application program (app) calculating measurements made by the scale. The scale may be foldable in the sense of being rolled, and to be placed for instance in a pocket size cover. It can also be folded in other manners for instance as handkerchiefs are folded. Moreover, it can be washed/wiped when utilized, or disposed.

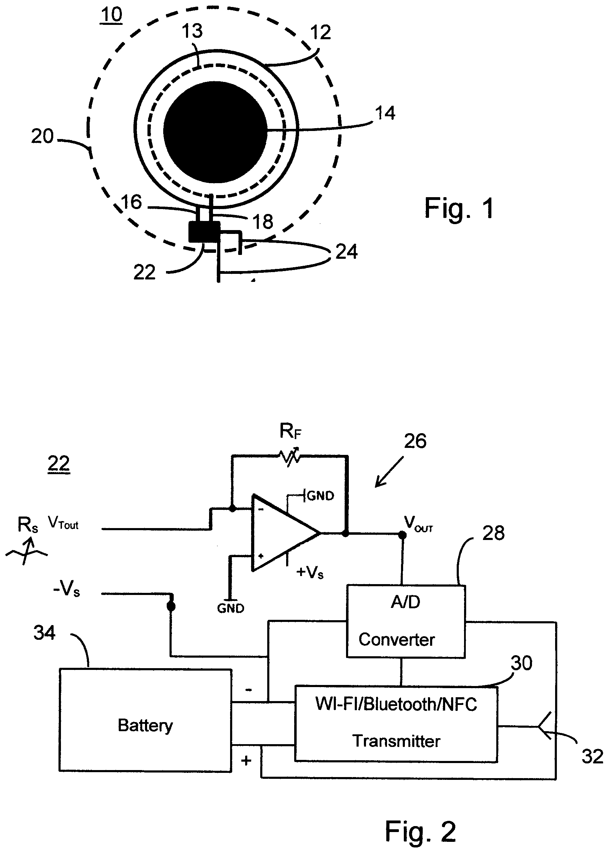

Fig. 1 schematically describes a scale 10 in accordance with the present invention with a thin first upper half substrate with a printed silver conductive electrode layer 12, a second thin upper half substrate with a printed silver conductive electrode layer, a pressure sensitive ink layer 14, the silver layer connection terminals 16, 18, the ink layer being placed between the silver conductors 16, 18, and two pieces of the substrate 20 on both sides of the scale of for instance a type of plastic, paper, thin-film, or other suitable foil making up a tactile sensor. The tactile sensor itself is 0,208 mm thick.

Moreover, it depicts the scales miniaturized or surface mounted electronic circuit 22 with terminals 24 for battery charging purposes embedded in the substrate 20. It is appreciated that the two conductive layers 12, 13 and the pressure sensitive ink can be of other shapes such as for instance a spiral, ring, matrix/array of dots squares or other shapes, not shown.

The Fig. 1 item with reference numerals 12, 13, 14, 16, 18, 20 is named a tactile sensor. Tactile flexible sensors are for instance manufactured by the US company Tekscan Inc, and Pressure Profile Systems, Inc., 5757 Century Bouleward Suite 600 Los Angeles, CA 90045 USA. Such tactile sensors can be custom build in accordance with the customers preferred design/shape. A tactile sensor is typically built on flexible circuit material so they can be thin, light, and flexible. A product manufactured by Tekscan Inc. has the brand name FlexiForce ^{®}, and consists of a special piezoresistive material sandwiched between two pieces of polyester with printed silver conductors on both inner half's resulting in a paper thin tactile scale sensor 12, 13 14, 16, 18, 20. Tactile sensors are basically resistors that vary linear in terms of conductance versus force under an applied load/pressure/force, whereby the change of conductance on an applied load/weight can be easily converted into the actual weight of an item placed on the scale sensor such as china/tableware. As the thin flexible tactile sensor is common knowledge it will not be described further in the description. But the shape of the conductive material 12, 13, and the pressure sensitive ink is not common knowledge as it is adapted to fit a pocket sized foldable scale 10.

In order to be able to weigh an item or a plate with our without food, the scale conductors 12, 13 and ink 14 should at least cover the heat dissipating rim/flange found under most tableware plates, which provides the pressure to the tactile scale sensor. The rim can have different diameters around 12 cm, and larger or smaller.

In Fig. 2 an electronic miniaturized circuit 22 is schematically depicted as a block diagram. It is manufactured out of miniature components; an OP amplifier circuit 26 amplifying the analog output voltage V_{TOUT} (Tout, terminal out) signal from one of the conductors 12, 13 the at the OP amp inverting input -. The V_{TOUT} voltage varies linear with the change of conductance when an item is weighed on the scale sensor. One of the silver conductors 12, 13 is connected to the supply voltage -V_{S} negative terminal to provide a power feed to the tactile sensor. Else, the supply voltage V_{S} powers the OP amp through its positive terminal. The output voltage V_{OUT} from the OP amp is fed to an Analogue to digital converter circuit A/D converter 28 providing a digital signal of the measured changes in conductance from the tactile sensor, which is measured as a change in voltage potential between the both conductors 12, 13 induced by the pressure sensitive ink 14 when a load is applied to the scale 10.

Moreover the electronic circuit 22 comprises a miniaturized Wl-FI/Bluetooth/NFC transmitter 30, with a possible aerial/antenna 32, to transmit the digitalized signal through radio frequency transmission to a smart phone, personal computer or the like computerized device (not shown), having a display, and an application program (app) or a computer program which calculates/transforms the weight of an item put on the scale of the present invention through the received digital signals. The app can also create the mentioned curves when the scale 20 is utilized to measure the amount of food taken from tableware such as a plate.

V_{OUT} =-V_{S} x (R_{F}/R_{S}) where R_{F} is the feedback variable resistor, and R_{S} is the variable resistance from the sensor 12, 13, 14 when a load is applied to it, meaning it is simple to calibrate with the feedback resistor R_{F}.

An OP amp can be of the type MCP6001 rail to rail amplifier, or the like amplifier, which in one embodiment has a size (width, width, height) in mm for instance in one embodiment (2,75, 1,45, 1,45) mm. Other data is available from e.g. Texas Instruments. The A/D converter 28 could for instance be an ADS7886 from Texas instruments (2,75, 1,45, 1,45) mm. Regarding WI-FI/Bluetooth^{®} tooth transmitters, the RFFM8202 transmitting on the frequency 802.11 can be utilized. A battery 34 to power the electronic circuit 22, can be found at the company Fullriver, which delivers ultra-thin batteries as for instance, the #023030Fe battery (30, 30, 0,25) mm with the nominal capacity & voltage of 5mAh/3.2 V, and being chargeable. The components named herein are only given examples/embodiments of possible ones to utilize for the in the scale embedded or plugged in electronics. With these components the scale 10 should have a thickness of approximately 1,45 mm, but with a plugged in circuit 22 only 0,21 mm .

Electronic components mentioned could be mounted on a square of approximately 30x30 mm at a height less than 1 mm. It is appreciated that the electronic circuit could be surface mounted in one embodiment of the present invention. With surface mounted components and new technology, the scale 10 can have a thickness of approximately 0,3 mm or less. It is appreciated that the scale 10 of the present invention is not limited to current dimensions of electronic components mentioned as long as it is in the gist of a foldable pocket sized scale.

A thin foldable tactile sensor for the purpose of the present invention can also be developed/manufactured with sensors that are capacitive sensors such as those made by Pressure Profile Systems, Inc., Los Angeles, CA, USA. Those sensors have a digital output signal, thus enabling to omit, not shown, the OP amplifier, and the A/D converter mentioned in the embodiment depicted in Fig. 2. The placement of the electronics, and tactile sensor for the capacitive digital embodiment can be the same as depicted in the exemplifying embodiments of Fig. 1, Fig. 3, and Fig. 4.

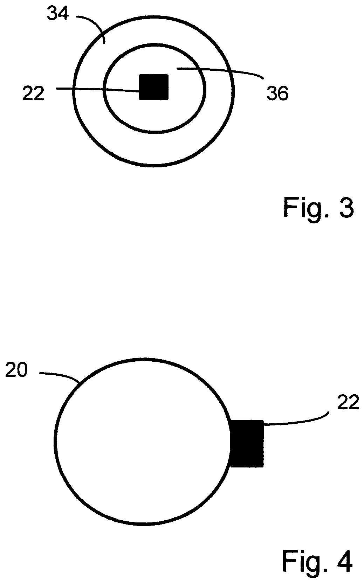

Fig. 3 depicts a possible ring shape 34 of the conductors 12, 13, and the pressure sensitive ink 14 fitting to the shape of a heat dissipating plate rim, and the space 26 does not comprise any conductor 12, 13 or ink 14. This so called empty space 36 can be utilized to embed the electronic circuit 22 in the mid of it, making it easy to fold or roll the entire scale, else the circuit could be placed adjacent to the perimeter of the scale to ease up its folding. As depicted in Fig. 3, by placing the electronic circuit 22 in the mid of the scale 10, the scale itself has a thickness of 0,208 mm, and the electronics 22 in the mid has approximately a thickness of 1,45 mm, making the scale easily foldable over the electronic circuit 22.

In Fig. 4 it is schematically illustrated a foldable scale 20 with a plug in electronic circuit 22, i.e. the circuit is for instance plugged in to the scale through female and male terminals/connectors (not shown).

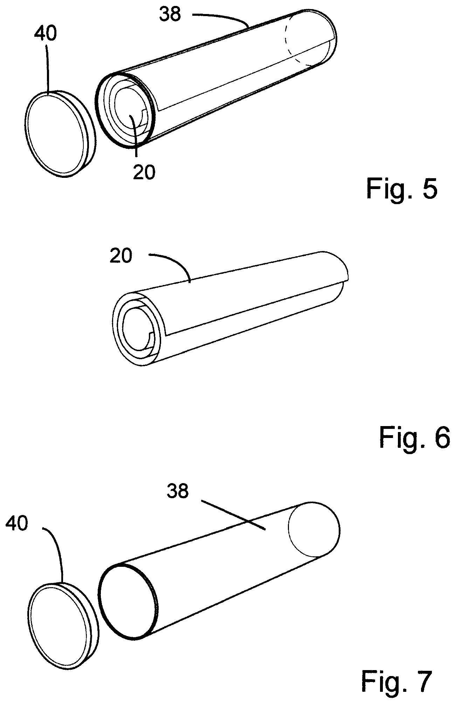

Fig. 5 schematically illustrates a folded scale 20 in a cover 38 with a lid/cap 40 in accordance with the present invention..

Fig. 6 schematically illustrates a rolled/folded scale 20 in accordance with the present invention.

Fig. 7 schematically illustrates a cover 38 for a scale with a lid/cap 40 in accordance with the present invention.

It is appreciated that the scale can be manufactured in multiple shapes such as being round, square, rectangular and other possible suitable shapes as well as it could reassemble a napkin/serviette. Also, it is appreciated that the electronic circuit 22 may comprise further components than those mentioned in the present invention embodiments such as buffers, digital amplifiers, and other manufacturing company specific components as long it is within the scoop of the present invention to provide a miniaturized and foldable scale.

The attached set of claims determines other possible embodiments of the present invention to a person skilled in the art of the present technical field.

## Claims

1. A pocket size foldable scale (10) to guide persons to eat food in a regulated sound manner, having at least one of embedded miniature electronics, and plug in miniature electronics, comprising:
at least one flexible thin substrate foldable tactile sensor with a thin first upper half substrate with a printed silver conductive electrode layer (12) with a silver layer connection terminal (16), a second thin upper half substrate with a printed silver conductive electrode layer (13) and a further silver layer connection terminal (18), a pressure sensitive ink layer (14), the silver layer connection terminals (16, 18,) and the ink layer being placed between the silver conductors (16, 18), and two pieces of the substrate (20), having a thickness in the range of 0,21 mm to 5 mm, outputting signals which are linear to weight due to at least one of a change of conductance, and resistance, when an object is weighed on said scale, wherein said two conductive layers (12, 13) and the pressure sensitive ink (14) are a spiral, ring or matrix/array of dots squares; and
a miniaturized electronic scale circuit comprising at least the following components an amplifier connected to said tactile sensor, which receives and amplifies said output sensor signals, said amplifier being connected to an analog to digital converter, which is connected to at least one of a WI-FI, near field communication, and Bluetooth transmitter, being able to transmit obtained scale signals to a device with a receiver for said scale signals, said scale electronics comprising a miniaturized battery powering said components.

2. A scale according to claim 1, wherein said scale is embedded in a thin plastic cover (20) being washable for further use or disposable after utilization.

3. A scale according to claim 1, wherein said scale is embedded in a disposable material other than plastic, and to be disposed after utilization.

4. A utilization of a pocket size foldable scale, having at least one of embedded miniature electronics, and plug in miniature electronics, to guide persons to eat food in a regulated sound manner comprising a scale according to any of claims 1 to 3.

5. A utilization of a scale according to claim 4, wherein said scale is embedded in a thin plastic cover being washable for further use or disposable after utilization.

6. A utilization of a scale according to claim 4, wherein said scale is embedded in a disposable material other than plastic, and to be disposed after utilization.

## Patentansprüche

1. Eine faltbare Waage (10) im Taschenformat, die Personen dazu anleitet, sich auf geregelte und gesunde Weise zu ernähren, der mindestens einer von eingebettete Miniaturelektronik und steckbare Miniaturelektronik aufweist, umfassend:
mindestens einen flexiblen, dünnen Substrat-faltbaren Tastsensor mit einer dünnen ersten oberen Substrathälfte mit einer gedruckten leitfähigen Silberelektrodenschicht (12) mit einem Silberschicht-Verbindungsanschluss (16), einer zweiten dünnen oberen Substrathälfte mit einer gedruckten leitfähigen Silberelektrodenschicht (13) und einen weiteren Silberschicht-Verbindungsanschluss (18), eine druckempfindliche Tintenschicht (14), die Silberschicht-Verbindungsanschlüsse (16, 18) und die Tintenschicht zwischen den Silberleitern (16, 18) angeordnet sind, und zwei Stücke des Substrats (20), mit einer Dicke von im Bereich von 0,21 mm bis 5 mm, wobei beim Wiegen eines Objekts auf der Waage Signale ausgegeben werden, die aufgrund einer Leitfähigkeits- und/oder Widerstandsänderung linear zum Gewicht sind, wobei die beiden leitenden Schichten (12, 13) und die druckempfindliche Tinte (14) liegen in einem Kreis oder einer Spirale oder einem Ring oder einem Quadrat vor; und
eine miniaturisierte elektronische Waagenschaltung, die mindestens die folgenden Komponenten umfasst: einen mit dem Tastsensor verbundenen Verstärker, der die Ausgangssensorsignale empfängt und verstärkt, wobei der Verstärker mit einem Analog-Digital-Wandler verbunden ist, der mit mindestens einem von einem WI-FI, Nahfeldkommunikation und Bluetooth-Sender verbunden ist, die in der Lage sind, die erhaltenen Waagensignale an ein Gerät mit einem Empfänger für die Waagensignale zu übertragen, wobei die Waagenelektronik eine miniaturisierte Batterie umfasst, die die Komponenten mit Strom versorgt.

2. Maßstab Eine Waage nach Anspruch 1, wobei der Waage in
eine dünne Kunststoffhülle (20) eingebettet ist, die zur weiteren Verwendung waschbar oder nach der Verwendung wegwerfbar ist.

3. Eine Waage nach Anspruch 1, wobei der Waage in ein anderes Einwegmaterial als Kunststoff eingebettet ist und nach Verwendung entsorgt werden kann.

4. Eine Verwendung einem faltbaren Waage im Taschenformat, der mindestens einer von eingebettete Miniaturelektronik und einsteckbare Miniaturelektronik aufweist, die Personen dazu anleitet, such auf geregelte und gesunde Weise zu ernähren, umfassend einen Waage nach einem der Ansprüche 1 bis 3.

5. Eine Verwendung einem Waage nach Anspruch 4, wobei der Waage in eine dünne Kunststoffhülle eingebettet ist, die zur weiteren Verwendung waschbar oder nach der Verwendung wegwerfbar ist.

6. Eine Verwendung einem Waage nach Anspruch 4, wobei der Waage in ein anderes Einwegmaterial als Kunststoff eingebettet ist und nach Verwendung entsorgt werden kann.

## Revendications

1. Balance pliable de poche (10) destinée à guider des personnes pour qu'elles mangent des aliments de manière régulée et sonore, comportant au moins un des éléments suivants:
composants électroniques miniatures et composants électroniques miniatures enfichables, comprenant:
au moins un capteur tactile pliable à substrat mince flexible comportant un premier demi-substrat supérieur mince doté d'une couche d'électrode conductrice en argent imprimée (12) avec une borne de connexion de couche d'argent (16), un second substrat demi-substrat mince supérieur doté d'une couche d'électrode conductrice en argent imprimée (12) 13) et une autre borne de connexion de couche d'argent (18), une couche d'encre sensible à la pression (14), les bornes de connexion de couche d'argent (16, 18) et la couche d'encre étant placées entre les conducteurs d'argent (16, 18), et deux morceaux de substrat (20), ayant une épaisseur en la plage de 0,21 mm à 5 mm, délivrant des signaux qui sont linéaires par rapport au poids en raison d'au moins un changement de conductance, et de résistance, lorsqu'un objet est pesé sur ladite balance, dans lequel lesdites deux couches conductrices (12, 13 ) et l'encre sensible à la pression (14) forment un cercle ou une spirale ou un anneau ou un carré ; et
un circuit de balance électronique miniaturisé comprenant au moins les composants suivants : un amplificateur connecté audit capteur tactile, qui reçoit et amplifie lesdits signaux de capteur de sortie, ledit amplificateur étant connecté à un convertisseur analogique-numérique, qui est connecté à au moins un des réseaux Wl- Fl, communication en champ proche, et émetteur Bluetooth, pouvant transmettre les signaux de balance obtenus à un dispositif doté d'un récepteur pour lesdits signaux de balance, ledit système électronique de balance comprenant une batterie miniaturisée alimentant lesdits composants.

2. Balance selon la revendication 1, dans laquelle ladite balance est intégrée dans une fine couverture en plastique (20) lavable pour une utilisation ultérieure ou jetable après utilisation.

3. Balance selon la revendication 1, dans laquelle ladite balance est noyée dans un matériau jetable autre que le plastique, et doit être jetée après utilisation.

4. Utilisation d'une balance pliable de poche, ayant au moins une électronique miniature intégrée, et une électronique miniature enfichable, pour guider les personnes à manger de la nourriture d'une manière sonore régulée, comprenant une balance selon l'une quelconque des revendications 1 à 3.

5. Utilisation d'une balance selon la revendication 4, dans laquelle ladite balance est incorporée dans un mince couvercle en plastique qui est lavable pour une utilisation ultérieure ou jetable après utilisation.

6. Utilisation d'une balance selon la revendication 4, dans laquelle ladite balance est noyée dans un matériau jetable autre que le plastique, et doit être jetée après utilisation.
